Europäisches Patentamt

European Patent Office

Office européen des brevets

(1) Publication number: **0 217 125**
**B1**

## EUROPEAN PATENT SPECIFICATION

(45) Date of publication of patent specification: **16.08.90**

(21) Application number: **86111765.3**

(22) Date of filing: **25.08.86**

(51) Int. Cl.⁵: **A 01 N 25/04,** A 01 N 47/30, A 01 N 43/50 // (A01N47/30, 43:50, 43:50),(A01N43/50, 43:50)

(54) Pesticidal aqueous flowable compositions.

(30) Priority: **27.09.85 US 780525**

(43) Date of publication of application:
**08.04.87 Bulletin 87/15**

(45) Publication of the grant of the patent:
**16.08.90 Bulletin 90/33**

(84) Designated Contracting States:
**AT BE CH DE FR GB IT LI LU NL SE**

(56) References cited:
**EP-A-0 163 598**
**FR-A-2 452 250**
**US-A-2 556 820**
**US-A-4 071 617**
**US-A-4 348 385**

(73) Proprietor: **AMERICAN CYANAMID COMPANY**
**1937 West Main Street P.O. Box 60**
**Stamford Connecticut 06904-0060 (US)**

(72) Inventor: **Bell, Mark**
**2 Alan Grove**
**Fareham Hampshire (GB)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 217 125 B1**

## Description

Flowable formulations of pesticides provide a method for applying water insoluble pesticides in an aqueous spray that avoids the handling of solid formulations such as wettable powders and granules. Aqueous based flowable compositions further avoid the use of organic solvent based flowables and emulsifiable concentrate compositions.

While aqueous flowable formulations of pesticides which are applied in aqueous sprays are highly desirable, gelling, caking and settling are major problems which are frequently encountered with this type of formulation.

These and other desirable features of flowable pesticide formulation and the difficulties encountered in preparing them are summarized in United States Patent 4,348,385, which describe flowable pesticide formulations in selected solvents, which are miscible with water, and United States Patent 4,071,617 describes aqueous based flowable pesticide formulations, which utilize vinyl alcohol/vinyl acetate polymers to obtain stability under mixing conditions.

It is an object of this invention to provide stable, aqueous flowable concentrate compositions of pesticides and a method for preparing said compositions.

This object is solved in accordance with the present invention by a pesticidal aqueous flowable concentrate composition comprising on a weight to volume basis 10%—40% of a finely ground particulate pesticide, which is an isomeric mixture of methyl 6-(4-isopropyl-4-methyl-5-oxo-2-imidazolin-2-yl)-*m*-toluate and methyl 2-(4-isopropyl-4-methyl-5-oxo-2-imidazolin-2-yl-*p*-toluate, alone or in combination with N,N-dimethyl-N'-[4-(1-methylethyl)phenyl]urea or N'-(3-chloro-4-methylphenyl)-N,N-dimethylurea or N'-(3-chloro-4-methoxyphenyl)-N,N-dimethylurea, suspended in an aqueous solution, containing 5% to 40% of a non-ionic surfactant having a kinematic viscosity of 5 to 100 centistokes as the vehicle for the flowable composition.

Stable aqueous flowable concentrates of solid pesticides may be prepared without the use of additional thickening agents such as clays and soluble gums, which are normally used to prevent or slow settling, by utilizing aqueous solutions containing 5% to 40% by weight of surfactants which as 25% aqueous solutions have kinematic viscosities of about 5 to about 100 centistokes as the vehicle for the flowable composition. Surfactants giving kinematic viscosities in the above approximate range permit the use of sufficient quantities of said surfactants to obtain aqueous flowable concentrate compositions containing on a weight to volume basis 10% to 40% of solid finely ground pesticides, 1.0% to 8.0% of wetting dispersing agents and optionally 0.5% to 2.0% of antifoam agents, and 1% to 10% antifreezing agents such as glycols and alcohols, having viscosities of from 0.6 to 6 Pa . s (600 to 6,000 centipoises) and preferably 1 to 3.5 Pa . s (1,000 to 3,500 centipoises) as measured by a Brookfield Viscometer, with a number 2 spindle at 6 rpm at 20°C, which resist settling of the solid components and do not gel. The kinematic viscosities of these surfactants measured as a 25% aqueous solution, allows the incorporation of high levels of surfactants in the final aqueous flowable pesticidal compositions, without causing them to become too viscous to process and use easily. The incorporation of high levels of surfactant provides the additional benefit that surfactants need not be incorporated during dilution of the flowable composition in a spray tank prior to application, making the compositions of this invention easier and safer to apply.

Surfactants suitable for use in compositions of the invention include polyoxyethylene alkyl phenols, polyoxyethylene styryl phenyl ether salts, polyoxyethylene fatty acids, polyoxyethylene alcohols and the like. Preferred surfactants for use in compositions of this invention are non-ionic, with the polyoxyethylene nonyl phenols containing 9 to 13 moles of ethoxylation and mixtures thereof being most preferred.

The pesticides that may be used in these stable concentrated flowables must be solids having essentially no significant water solubility (i.e., less than about 1.0 g/100 cc $H_2O$ at ambient temperature) and a particle size less than 20 μ, usually in the range of 0.5 to 20 μ. Preferably such particles will range in size from 0.5 μ to 5 μ.

Pesticides, e.g., insecticides, fungicides, viricides, acaricides, herbicides, bactericides, and the like, having the above specifications may be used in the aqueous flowable concentrates of this invention. A representative example of a presently available pesticide which may be used in this invention is the recently introduced imidazolin-2-yl benzoate herbicide which is an isomeric mixture of methyl 6-(4-isopropyl-4-methyl-5-oxo-2-imidazolin-2-yl)-m-toluate and methyl 2-(4-isopropyl-4-methyl-5-oxo-2-imidazolin-2-yl-p-toluate. Stable aqueous flowable concentrates containing high concentrations i.e. 20% to 35% on a weight to volume basis of this herbicide may be readily prepared by milling an aqueous slurry containing 30% to 45% by weight of the herbicide, 2.0% to 4.0% by weight of a dispersing and/or wetting agent optionally containing 0.5 to 2.0% of an antifoam agent to the appropriate average particle size range of 0.5 to 20.0 microns and preferably less than 5 microns. The aqueous flowable concentrate composition is then prepared by adding any additionally desired quantities of wetting and/or dispersing agents, and antifoam agents or antifreezing agents; and sufficient required water to total 100% of the final composition, followed by the addition to the agitated aqueous slurry, of 5% to 35% of a surfactant having a kinematic viscosity of about 5 to about 100 centistokes.

2

Examples 1—5
Preparation of stable aqueous flowable concentrate
A. Preparation of ground particulate aqueous slurry

1. Calculate the quantities of each ingredient required and mix as follows: To a suitable vessel with fitten agitation, add all the water, then the antifoam agent if desired and then the wetting/dispersing agent, isomeric mixture of methyl 6-(4-isopropyl-4-methyl-5-oxo-2-imidazolin-2-yl)-*m*-toluate, and methyl 2-(4-isopropyl-4-methyl-5-oxo-2-imidazolin-2-yl-*p*-toluate. Gradually add the technical with vigorous high-shear agitation until a mobile slurry results. Continue high shear-mixing until the particle size is suitable for milling, avoiding air entrainment during mixing.

2. Pass the slurry through a mill to give a suspension with particle size essentially 98% less than 5 microns.

3. Sample the milled slurry and analyse for active ingredient (% w/w).

B. Preparation of aqueous flowable concentrate

1. Calculate the weight of milled slurry required for the final product and add it to a suitable vessel fitted with efficient agitation.

2. Calculate the extra quantities if any of wetting/dispersing agent, antifoam and antifreeze required in the final product and add them to the slurry and until the mixture is homogeneous.

3. Calculate the quantity of extra water required and add it to the vessel and mix until homogeneous.

4. Gradually add and dissolve the required amount of surfactant having a kinematic viscosity of 5 to 100 centistokes and mix, avoiding with vigorous agitation.

5. Mix thoroughly until all the surfactant is dissolved and a smooth, uniform product is obtained.

Utilizing the above procedure yields the stable aqueous flowable compositions listed in Table I below.

TABLE I
Aqueous flowable concentrate compositions

| Isomeric mixture of | Ex. 1 (g/l) | Ex. 2 (g/l) | Ex. 3 (g/l) | Ex. 4 (g/l) | Ex. 5 (g/l) |
|---|---|---|---|---|---|
| Methyl 6-(4-isopropyl-4-methyl-5-oxo-2-imidazolin-2-yl)-*m*-toluate and methyl 2-(4-isopropyl-4-methyl-5-oxo-2-imidazolin-2-yl-toluate | 340.0 | 283.3 | 340.0 | 283.3 | 226.7 |
| Polyethoxylated nonylphenol (11 mol EO) viscosity 15 centistokes as a 25% aqueous solution non-ionic surfactant | 120.0 | 160.0 | 150.0 | 200.0 | 200.0 |
| Wetting/dispersing agent (polyethoxylated polyarylphenol phosphate, neutralized with triethanolamine) | 40.0 | 40.0 | 40.0 | 40.0 | 40.0 |
| Silicone antifoam agent | 7.5 | 7.5 | 7.5 | 7.5 | 7.5 |
| Water (balance) | 532.5 | 539.2 | 499.2 | 499.2 | 555.8 |

Stability:

| Storage time | Example No. | Average percent recovery | | |
|---|---|---|---|---|
| | | 28°C | 37°C | 50°C |
| One month | 1—5 | 100.0 | 98.0 | 97.0 |
| Two months | 3 & 5 | 99.0 | 98.0 | 98.0 |

### TABLE II
Polyoxyethylene nonylphenols suitable for use in
compositions of the invention

| Average ethoxylation (moles) | Kinematic viscosity (25% aqueous solution) centistokes |
|---|---|
| 9.5 | 102 |
| 9.5 | 87 |
| 10.0 | 53 |
| 10.0 | 43 |
| 10.0 | 22 |
| 10.5 | 18 |
| 11.0 | 30 |
| 12.0 | 13 |

Example 6

Preparation of stable aqueous flowable concentrate compositions

Utilizing the procedure of examples and substituting the polyethoxylated nonylphenols having varying moles of ethoxylation and kinematic viscosities of 13 to 100 centistokes as a 25% aqueous solution listed in Table II below for the surfactant utilized in Example 1 yields stable aqueous flowable concentrate compositions of methyl 6-(4-isopropyl-4-methyl-5-oxo-2-imidazolin-2-yl)-*m*-toluate and methyl 2-(4-isopropyl-4-methyl-5-oxo-2-imidazolin-2-yl-*p*-toluate.

Examples 7—8

Utilizing the procedures of Examples 1—5 and substituting the mixed polyoxyethylene nonylphenol with 10 to 12 moles of ethoxylation and a polyoxyethylene styrylphenyl ether sulphate which as a 25% aqueous solution has a kinematic viscosity of about 8 centistokes, for the polyoxyethylene nonylphenols employed in those examples yields the stable aqueous flowable compositions listed in Table III below.

Examples 9—10

Utilizing the procedure of Examples 1—5, utilizing mixtures of herbicides yields the stable aqueous flowable compositions listed in Table IV below.

### TABLE III
Aqueous flowable concentrate compositions

| Composition | Example 7 % w/v | Example 8 % w/v |
|---|---|---|
| Methyl 6-(4-isopropyl-4-methyl-5-oxo-2-imidazolin-2-yl)-*m*-toluate methyl 2-(4-isopropyl-4-methyl-5-oxo-2-imidazolin-2-yl-*p*-toluate | 33.1 | 33.1 |
| Wetting/dispersing agent polyoxyethylene glycol sulfate | 4.0 | 4.0 |
| Polyoxyethylene styrylphenylether sulfate | 11.25 | 3.0 |
| Polyoxyethylene nonylphenol 10—12 moles of ethoxylation | 0.0 | 11.5 |
| Ethylene glycol | 5.0 | 5.0 |
| Water | to 100% | to 100% |

TABLE IV
Note: The following mixtures can also be prepared

| Composition | Example 8 % w/v | Example 9 % w/v | Example 10 % w/v |
|---|---|---|---|
| Methyl 6-(4-isopropyl-4-methyl-5-oxo-2-imidazolin-2-yl)-*m*-toluate methyl 2-(4-isopropyl-4-methyl-5-oxo-2-imidazolin-2-yl-*p*-toluate | 10.0 | 10.0 | 5.3 |
| N,N-Dimethyl-N'-[4-(1-methylethyl)phenyl]urea | 25.0 | — | — |
| N'-(3-Chloro-4-methylphenyl)-N,N-dimethylurea | — | 25.0 | — |
| N'-(3-Chloro-4-methoxyphenyl)-N,N-dimethylurea | — | — | 32.0 |
| Polyoxyethylene styrylphenylether sulfate | 4.0 | 4.0 | 4.0 |
| Polyoxyethylene nonylphenol 11 moles of ethoxylation | 10.0 | 10.0 | 10.0 |
| Ethylene glycol | 8.0 | 8.0 | 8.0 |
| Silicone antifoam agent | 0.75 | 0.75 | 0.75 |
| Water | to 100% | to 100% | to 100% |

## Claims

1. A pesticidal aqueous flowable concentrate composition comprising on a weight to volume basis 10% to 40% of a finely ground particulate pesticide, which is an isomeric mixture of methyl 6-(4-isopropyl-4-methyl-5-oxo-2-imidazolin-2-yl)-*m*-toluate and methyl 2-(4-isopropyl-4-methyl-5-oxo-2-imidazolin-2-yl-*p*-toluate, alone or in combination with N,N-dimethyl-N'-[4-(1-methylethyl)phenyl]urea or N'-(3-chloro-4-methylphenyl)-N,N-dimethylurea or N'-(3-chloro-4-methoxyphenyl)-N,N-dimethylurea, suspended in an aqueous solution, containing 5% to 40% of a non-ionic surfactant having a kinematic viscosity of 5 to 100 centistokes as the vehicle for the flowable composition.

2. A pesticidal aqueous flowable concentrate composition according to claim 1, having a viscosity of 0.6 to 6 Pa . s (600 to 6,000 centipoises) as measured by a Brookfield Viscometer with a number 2 spindle, at 6 rpm, at 20°C, wherein the particle size of the pesticide is in the range of 0.5 to 20 μm.

3. A composition according to Claim 2, wherein the particle size of greater than 95% of the pesticide is 5 μm or less; additionally containing on a weight to volume basis based on the total composition, 1% to 8.0% of a wetting/dispersing agent; 0.5 to 2.0% of an antifoam agent and 0.0 to 10% of an antifreezing agent.

4. A composition according to Claim 3, wherein the surfactant is a polyoxyethylene nonylphenol having 9 to 13 moles of ethoxylation or mixtures thereof alone or in combination with a polyoxyethylene styrylphenylethersulfate.

5. A composition according to Claim 4, having a viscosity of 1 to 3.5 Pa . s (1,000 to 3,500 centipoises) as measured with a Brookfield Viscometer with a number 2 spindle, at 6 rpm, at 20°C.

6. A method for the preparation of a pesticidal aqueous flowable concentrate composition comprising milling an aqueous slurry containing 30% to 45% by weight of a pesticide, which is an isomeric mixture of methyl 6-(4-isopropyl-4-methyl-5-oxo-2-imidazolin-2-yl)-*m*-toluate and methyl 2-(4-isopropyl-4-methyl-5-oxo-2-imidazolin-2-yl-*p*-toluate, alone or in combination with N,N-dimethyl-N'-[4-(1-methylethyl)phenyl]urea or N'-(3-chloro-4-methylphenyl)-N,N-dimethylurea or N'-(3-chloro-4-methoxyphenyl)-N,N-dimethylurea, 2.0% to 4.0% by weight of a dispersing and/or wetting agent containing 0.0 to 2.0% of an antifoam agent to the appropriate average particle size range of 0.5 to 20.0 microns, adding any additionally desired quantities of wetting and/or dispersing agents, and antifoam agents or anti-freezing agents; and sufficient required water to total 100% of the final composition, agitating the aqueous slurry and adding 5% to 35% of a non-ionic surfactant which as a 25% aqueous solution has a kinematic viscosity of 5 to 100 centistokes to the agitated aqueous slurry.

7. A method according to Claim 6, wherein the surfactant is a polyoxyethylene nonylphenol having 9 to 13 moles of ethoxylation or mixtures thereof alone or in combination with a polyoxyethylene styrylphenylethersulfate.

## Patentansprüche

1. Pestizide, als wässriges, fließfähiges Konzentrat vorliegende Zusammensetzung, umfassend auf einer Gewicht-zu-Volumenbasis 10% bis 40% eines fein gemahlenen teilchenförmigen Pestizids, wobei es sich um ein Isomerengemisch von Methyl-6-(4-isopropyl-4-methyl-5-oxo-2-imidazolin-2-yl)-*m*-toluat und Methyl-2-(4-isopropyl-4-methyl-5-oxo-2-imidazolin-2-yl)-*p*-toluat, allein oder in Kombination mit N,N-Dimethyl-N'-[4-(1-methylethyl)phenyl]-harnstoff oder N'-(3-Chlor-4-methylphenyl)-N,N-dimethylharnstoff oder N'-(3-Chlor-4-methoxyphenyl)-N,N-dimethylharnstoff handelt, suspendiert in einer wässrigen Lösung mit einem Gehalt von 5 bis 40% eines nicht-ionischen Surfaktant mit einer kinematischen Viskosität von 5 bis 100 Centistokes als das Vehikel für die fließfähige Zusammensetzung.

2. Pestizide, als wässriges, fließfähiges Konzentrat vorliegende Zusammensetzung gemäß Anspruch 1, die eine Viskosität von 0,6 bis 6 Pa . s (600 bis 6000 Centipoise), gemessen mit einem Brookfield Viscometer mit einer Nummer 2 Spindel bei 6 Umdrehungen pro Minute bei 20°C, aufweist und wobei die Teilchengröße des Pestizids im Bereich von 0,5 bis 20 µm liegt.

3. Zusammensetzung gemäß Anspruch 2, wobei die Teilchengröße von über 95% des Pestizids 5 µm oder weniger beträgt; mit einem zusätzlichen Gehalt auf Gewicht-zu-Volumenbasis, bezogen auf die Gesamtzusammensetzung, von 1% bis 8,0% eines Benetzungs-/Dispergiermittels; 0,5 bis 2,0% eines Antischaummittels und 0,0 bis 10% eines Frostschutzmittels.

4. Zusammensetzung gemäß Anspruch 3, wobei das Surfaktant ein Polyoxyethylennonylphenol mit 9 bis 13 Mol Ethoxylierung ist oder Mischungen davon allein oder in Kombination mit einem Polyoxyethylen-styrylphenylethersulfat.

5. Zusammensetzung gemäß Anspruch 4, die eine Viskosität von 1 bis 3,5 Pa . s (1,000 bis 3,500 Centipoise), gemessen mit einem Brookfield Viscometer mit einer Nummer 2 Spindel bei 6 Umdrehungen pro Minute bei 20°C, aufweist.

6. Verfahren zur Herstellung einer pestiziden, als wässriges, fließfähiges Konzentrat vorliegenden Zusammensetzung, umfassend das Mahlen einer wässrigen Aufschlämmung, die 30 bis 45 Gew.% eines Pestizids enthält, wobei es sich um ein Isomerengemisch von Methyl-6-(4-isopropyl-4-methyl-5-oxo-2-imidazolin-2-yl)-*m*-toluat und Methyl-2-(4-isopropyl-4-methyl-5-oxo-2-imidazolin-2-yl)-*p*-toluat, allein oder in Kombination mit N,N-Dimethyl-N'-[4-(1-methylethyl)phenyl]-harnstoff oder N'-(3-Chlor-4-methylphenyl)-N,N-dimethylharnstoff oder N'-(3-Chlor-4-methoxyphenyl)-N,N-dimethylharnstoff handelt, 2,0 bis 4,0 Gew.% eines Dispergier- und/oder Benetzungsmittels, enthaltend 0,0 bis 2,0% eines Antischaummittels, bis der zweckentsprechende durchschnittliche Teilchengrößenbereich von 0,5 bis 20,0 µm erreicht ist, Zugabe etwaiger zusätzlich gewünschter Mengen von Benetzungs- und/oder Dispergiermitteln und Antischaummitteln oder Gefrierschutzmitteln und soviel Wasser wie erforderlich ist, um 100% der Endzusammensetzung zu erreichen, Rühren der wässrigen Aufschlämmung und Zugabe von 5 bis 35% eines nicht-ionischen Surfaktants, das als 25%-ige wässrige Lösung eine kinematische Viskosität von 5 bis 100 Centistokes aufweist, zu der gerührten wässrigen Aufschlämmung.

7. Vefahren gemäß Anspruch 6, wobei das Surfaktant ein Polyoxyethylen-nonylphenol mit 9 bis 13 Mol Ethoxylierung ist oder Mischungen davon allein oder in Kombination mit einem Polyoxyethylenstyrylphenylethersulfat.

## Revendications

1. Composition pesticide concentrée fluide aqueuse, comprenant, en poids par rapport au volume, 10%—40% d'un pesticide particulaire finement broyé qui est un mélange d'isomères constitué de 6-(4-isopropyl-4-méthyl-5-oxo-2-imidazoline-2-yl)-m-toluate de méthyle et de 2-(4-isopropyl-4-méthyl-5-oxo-2-imidazoline-2-yl)-p-toluate de méthyle, seul ou en association avec de la N,N-diméthyl-N'-[4-(1-méthyléthyl)phényl]urée ou de la N'-(3-chloro-4-méthylphényl)-N,N-diméthylurée ou de la N'-(3-chloro-4-méthoxyphényl)-N,N-diméthylurée, en suspension dans une solution aqueuse contenant de 5 à 40% d'un surfactif non ionique ayant une viscosité cinématique de 5 à 100 centistokes, en tant que véhicule pour la composition fluide.

2. Composition pesticide fluide aqueuse selon la revendication 1, ayant une viscosité de 0,6 à 6 Pa . s (600 à 6 000 centipoises), telle que mesurée à l'aide d'un viscosimètre de Brookfield avec la broche No. 2, à 6 tours/minute, à 20°C, et dans laquelle la taille de particules du pesticide est dans la plage de 0,5 à 20 µm.

3. Composition selon la revendication 2, dans laquelle la taille de particules de plus de 95% du pesticide est de 5 µm ou moins; contenant en outre, en poids par rapport au volume de la composition totale, de 1 à 8,0% d'un agent mouillant/dispersant, de 0,5 à 2,0% d'un antimousse et de 0,0 à 10% d'un antigel.

4. Composition selon la revendication 3, dans laquelle le surfactif est un nonylphénol polyoxyéthylé contenant de 9 à 13 moles d'oxyéthylène ou un mélange de tels nonylphénols, seul ou en association avec un sulfate d'éther styrylphénylique polyoxyéthylé.

5. Composition selon la revendication 4, ayant une viscosité de 1 à 3,5 Pa . s (1 000 à 3 500 centipoises), telle que mesurée à l'aide d'un viscosimètre de Brookfield avec la broche No. 2, à 6 tours/minute, à 20°C.

6. Procédé pour la préparation d'une composition pesticide concentrée fluide aqueuse, comportant le broyage d'une suspension aqueuse contenant de 30 à 45% en poids d'un pesticide qui est un mélange d'isomères constitué de 6-(4-isopropyl-4-méthyl-5-oxo-2-imidazoline-2-yl)-m-toluate de méthyle et de 2-(4-isopropyl-4-méthyl-5-oxo-2-imidazoline-2-yl)-p-toluate de méthyle, seul ou en association avec de la N,N-diméthyl-N'-[4-(1-méthyléthyl)phényl]urée ou de la N'-(3-chloro-4-méthylphényl)-N,N-diméthylurée ou de

la N'-(3-chloro-4-méthoxyphényl)-N,N-diméthylurée, de 2,0 à 4,0% en poids d'un agent dispersant et/ou mouillant contenant de 0,0 à 2,0% d'un antimousse, jusqu'à la taille moyenne de particules appropriée, allant de 0,5 à 20,0 µm, l'addition de toutes quantités supplémentaires désirées d'agents mouillants et/ou dispersants et d'antimousses ou d'antigels, et de la quantité d'eau requise pour atteindre 100% de la composition finale, l'agitation de la suspension aqueuse et l'addition à la suspension aqueuse agitée de 5 à 35% d'un surfactif non ionique, qui, sous forme d'une solution aqueuse à 25%, a une viscosité cinématique de 5 à 100 centistokes.

7. Procédé selon la revendication 6, dans lequel le surfactif est un nonylphénol polyoxyéthylé ayant de 9 à 13 moles d'oxyde d'éthylène, ou un mélange de tels nonylphénols, seul ou en association avec un sulfate d'éther styrylphénylique polyoxyéthylé.